# EUROPÄISCHE PATENTSCHRIFT

(11) **EP 2 652 330 B1**
(45) Veröffentlichungstag und Bekanntmachung des Hinweises auf die Patenterteilung: **25.07.2018**
(21) Anmeldenummer: 11787619.3
(22) Anmeldetag: 22.11.2011
(51) Int. Cl.: F04B 25/00

(54) **KOMPRESSOR, DRUCKLUFTVERSORGUNGSANLAGE, PNEUMATISCHES SYSTEM UND VERFAHREN ZUM BETREIBEN EINER DRUCKLUFTVERSORGUNGSANLAGE**
COMPRESSOR, COMPRESSED-AIR SUPPLY SYSTEM, PNEUMATIC SYSTEM AND METHOD FOR OPERATING A COMPRESSED-AIR SUPPLY SYSTEM
COMPRESSEUR, INSTALLATION D'ALIMENTATION EN AIR COMPRIMÉ, SYSTÈME PNEUMATIQUE ET PROCÉDÉ POUR FAIRE TRAVAILLER UNE INSTALLATION D'ALIMENTATION EN AIR COMPRIMÉ

(30) Priorität: 16.12.2010 DE 102010054710
(43) Veröffentlichungstag der Anmeldung: 23.10.2013
(73) Patentinhaber: WABCO GmbH, 30453 Hannover (DE)
(72) Erfinder: STABENOW, Uwe, 30880 Laatzen (DE)
(74) Vertreter: Lauerwald, Jörg
(86) Internationale Anmeldenummer: PCT/EP2011/005867
(87) Internationale Veröffentlichungsnummer: WO 2012/079692

(56) Entgegenhaltungen:
- EP-A1- 0 000 611
- WO-A2-2006/093569
- DE-A1- 1 403 963
- DE-A1- 19 912 800
- FR-A1- 2 036 744
- GB-A- 214 907

## Beschreibung

Die Erfindung betrifft einen Kompressor für eine Druckluftzuführung einer Druckluftversorgungsanlage zum Betreiben einer Pneumatikanlage gemäß dem Oberbegriff des Anspruchs 1 sowie eine Druckluftversorgungsanlage gemäß dem Oberbegriff des Anspruchs 14. Weiter betrifft die Erfindung ein pneumatisches System gemäß dem Anspruch 19 und ein Verfahren gemäß dem Oberbegriff des Anspruchs 20.

Eine Druckluftversorgungsanlage wird in Fahrzeugen aller Art, insbesondere zur Versorgung einer Luftfederanlage eines Fahrzeugs mit Druckluft, eingesetzt. Luftfederanlagen können auch Niveauregelungseinrichtungen umfassen, mit denen der Abstand zwischen Fahrzeugachse und Fahrzeugaufbau eingestellt werden kann. Eine Luftfederanlage eines eingangs genannten pneumatischen Systems umfasst eine Anzahl von an einer gemeinsamen Leitung (Galerie) pneumatisch angeschlossenen Luftbälgen, die mit zunehmender Befüllung den Fahrzeugaufbau anheben und entsprechend mit abnehmender Befüllung absenken können. Mit wachsendem Abstand zwischen Fahrzeugachse und Fahrzeugaufbau bzw. Bodenfreiheit werden die Federwege länger und auch größere Bodenunebenheiten können überwunden werden, ohne dass es zu einer Berührung mit dem Fahrzeugaufbau kommt. Vorzugsweise werden solche Systeme zunehmend in Geländefahrzeugen und Sport-Utility-Vehicles (SUV) eingesetzt. Insbesondere bei SUVs ist es bei sehr leistungsstarken Motoren wünschenswert, das Fahrzeug einerseits für hohe Geschwindigkeiten auf der Straße mit vergleichsweise geringer Bodenfreiheit zu versehen und anderseits für das Gelände mit einer vergleichsweise großen Bodenfreiheit zu versehen.

Es ist weiter wünschenswert, eine Veränderung der Bodenfreiheit möglichst schnell umzusetzen, was die Anforderungen hinsichtlich Schnelligkeit, Flexibilität und Verlässlichkeit einer Luftdruckversorgungsanlage erhöht.

DE 10 2008 034 240 A1 offenbart eine Druckluftversorgungsanlage der eingangs genannten Art. Diese sieht einen Kompressor mit einer ersten und einer zweiten Verdichterstufe vor, die gemeinsam verwendet werden können, um eine Luftfederanlage vergleichsweise zügig und bei hohen Drücken zu befüllen. Insgesamt stellt sich die Leistungsfähigkeit von zwei- oder mehrstufigen Verdichtern als überlegen gegenüber einem einstufigen Verdichter heraus. In der vorgenannten DE 10 2008 034 240 A1 ist ein zweistufiger Kompressor vorgesehen, der in jeder Verdichtungsstufe einen Ansaugraum und einen Verdichtungsraum aufweist. Die an sich vorteilhafte zweistufige Auslegung des Kompressors ist noch verbesserbar.

Insbesondere haben sich Doppelkolben-Kompressoren, wie sie in DE 103 21 771 A1 oder DE 197 15 291 C2 beschrieben sind, insbesondere aufgrund des Teile- und Raumbedarfs sowie ihres Gewichts als noch verbesserungswürdig erwiesen. An sich bekannte Doppelkolben- Kompressoren mit einer ersten und einer zweiten Verdichterstufe sind aufgrund der mit einem Doppelkolben verursachten wenig kompakten Bauweise und zwangsläufig hohe Masse-Trägheit des Systems noch verbesserbar.

Ein zweistufiger Kompressor der JP9088819A sieht einen Kolben und zwei Verdichtungsräume mit unterschiedlichem Volumen vor, die außerhalb des Zylinderraumes gebildet sind. Dieser Kompressor lässt sich insbesondere hinsichtlich des Bauraumbedarfs verbessern.

Wünschenswert ist eine zwei- oder mehrstufige Verdichtung, die unter Erhalt der mit einer zweistufigen Verdichtung verbundenen Vorteile, die sich dennoch kompakter und flexibler einsetzbar realisieren lässt.

Die FR2036744 offenbart eine Vorrichtung zur Druckerzeugung und Schmierung eines zweistufigen Verdichter mit Saug- und Druckleitungen, welche in Reihe geschaltet sind, und zwei miteinander fest verbundene Verdichtungskolben mit jeweiligen Kolbenringen.

Die GB214907 offenbart einen Kompressor, der einen Zylinder mit angrenzenden koaxialen Bohrungen jeweils vorgesehen für eine Kompressionsstufe aufweist, wobei die Bohrung der Niederdruckstufe an jedem Ende mit Ansaug- und Auslassventilen vorgesehen ist, und die angrenzenden kleineren Bohrungen an seinem entfernten Ende nur mit Saug- und Druckventilen, alle Bereiche im Inneren des Zylinders, vorgesehen ist, sowie Verdichtungsräumen und einen Zylinderkopf, welcher lösbar mit dem größeren Ende des Zylinders befestigt ist. Der gestufte Kolben weist je Kolbenstufe eine Kolbenringdichtung auf, wobei die kleinste Verdichtungsstufe, d. h. Niederdruck-Verdichtungskammer, des Kolbens der Seite der Kolbstange zugeordnet ist und die Verdichtungskammer mit dem höchsten Druck dem Kolbenende zum Verdichtergehäuse zugeordnet ist. Die Niederdruck-Verdichtungskammer wird durch zwei Stopfbuchsen in dem Verdichtergehäuse gegenüber der Kolbenstange abgedichtet.

Die DE1403963 offenbart einen Kompressor mit wenigstens drei Stufen. Unter Verwendung von Kolben mit jeweils einer Stufe in einer in der der schwächere Teil des Kolbens dem Kolbenantriebselement zugekehrt ist und der Kolbenkopf mit größerem Durchmesser aus Umgebung ansaugt, während eine höhere Druckstufe in dem Ringraum vorgesehen ist, der durch den abgesetzten Kolben gebildet ist und Ventile an Saug- und Druckstutzen angeordnet sind, wobei wenigstens zwei Zylinder vorgesehen sind, alle Kolbenköpfe aus der Umgebung ansaugen und
gemeinsam die erste Druckstufe bilden und höchstens zwei Ringräume in den Zylindern eine höhere Druckstufe bilden,
wobei die Kolbenschäfte der Differentialkolben für höhere Stufen zunehmend größere Durchmesser aufweisen.

An dieser Stelle setzt die Erfindung an, deren Aufgabe es ist, eine Vorrichtung und ein Verfahren zum Betreiben einer Pneumatikanlage anzugeben, wobei eine Verbesserung der Verfügbarkeit von Druckluft bei dennoch kompakter Auslegung der Vorrichtung und flexibler Verfahrensführung möglich sein soll. Insbesondere soll ein Kompressor einen vergleichsweise hohen Wirkungsgrad bei dennoch kompakter Bauweise aufweisen. Insbesondere soll die Druckluftversorgungsanlage für einen Befüllbetrieb der Pneumatikanlage eine Druckluft in verbesserter Weise verfügbar machen. Insbesondere soll eine Druckluftversorgungsanlage Druckluft in verbesserter Weise befüllen und/oder entlüften können. Insbesondere soll eine Schallemission beim Betrieb des Kompressors bzw. der Druckluftversorgungsanlage vergleichsweise gering gehalten sein.

Die Aufgabe betreffend die Vorrichtung wird durch einen Kompressor der eingangs genannten Art gelöst, bei dem erfindungsgemäß auch die Merkmale des kennzeichnenden Teils des Anspruchs 1 vorgesehen sind.

Die Erfindung geht von der Überlegung aus, dass ein an sich bekannter Kompressor mit einer ersten und zweiten Verdichterstufe für eine Druckluftzuführung vergleichsweise hohe Druckdifferenzen erzeugen können sollte - diese liegen regelmäßig oberhalb des Atmosphärendrucks bis hin zu Druckmaxima von wenigstens 20bar, teilweise bis zu 30bar oder mehr. Darüber hinaus soll - insbesondere für den Einsatzzweck einer Luftfederanlage eines Fahrzeugseine Druckluft vergleichsweise schnell und flexibel verfügbar sein. Die Erfindung hat erkannt, dass es möglich ist, für einen Kompressor eine zweistufige Verdichtereinheit zur Verfügung zu stellen. Die als solche kompakt ausgebildete zweistufige Verdichtereinheit weist erfindungsgemäß einen einzigen Zylinder mit einem einzigen in einem Verdichtungsraum des Zylinders zweiseitig druckbeaufschlagbaren Kolben auf. Die Erfindung hat erkannt, dass eine solche zweistufige Verdichtereinheit vergleichsweise kompakt und in Leichtbauweise ausgeführt werden kann, ohne Kompromisse beim Wirkungsgrad und der Leistungsfähigkeit machen zu müssen. Darüber hinaus bietet die Ausführung einer zweistufigen Verdichtereinheit besonders gute Möglichkeiten einer Schallemissionsbegrenzung. Eine optimale 180° Phasenverschiebung einer Verdichtung in der ersten Verdichterstufe relativ zur zweiten Verdichterstufe ist aufgrund der Anordnung der Verdichterkammern zum Kolben gewährleistet.

Die Erfindung sieht zur Ausführung dieses Konzepts vor, dass der Kolben der zweistufigen Verdichtereinheit als ein Stufenkolben mit einer Flachseite und mit einer an eine Kolbenstange anschließende Stufenseite ausgebildet ist. Insbesondere sieht die Erfindung vor, dass die Kolbenstange starr, insbesondere senkrecht an der Stufenseite des Kolbens fest anschließt. Auf diese Weise ist besonders einfach eine Fläche der Flachseite des Kolbens größer gestaltet als eine Fläche der Stufenseite des Kolbens. Die erste Verdichterstufe befindet sich dementsprechend vorteilhaft auf der Flachseite des Kolbens und weist ein größeres Hubvolumen als die zweite, der Stufenseite angrenzenden Verdichtungskammer auf. Im Ergebnis wird mit dem Konzept der Erfindung eine leichte, vergleichsweise einfache und dennoch effektive und kompakte Integration einer zweistufigen Verdichtung in einem einzigen Zylinder mit einem einzigen Kolben erreicht.

Die Erfindung sieht zur Lösung der Aufgabe hinsichtlich der Vorrichtung weiter eine Druckluftversorgungsanlage des Anspruchs 14 vor, die einen erfindungsgemäßen Kompressor aufweist. Die Druckluftversorgungsanlage dient zum Betreiben einer Pneumatikanlage, bei welcher an den Luftzufuhranschluss eine Luftzufuhr angeschlossen ist und an den zweiten Druckluftzuführungsanschluss ein Druckmittelvorratsbehälter angeschlossen ist.

Die Erfindung führt auch auf ein pneumatisches System des Anspruchs 19.

Die Aufgabe hinsichtlich des Verfahrens wird durch die Erfindung mittels einem Verfahren der eingangs genannten Art gelöst, bei dem erfindungsgemäß die Merkmale des kennzeichnenden Teils des Anspruchs 20 vorgesehen sind.

Das Konzept der Erfindung bietet, insbesondere hinsichtlich des Verfahrens, eine optionale Boost-Funktion für die zweite Verdichterstufe. Das Konzept der Erfindung sieht einen Luftzufuhranschluss an der ersten Verdichterstufe vor.

Über den Luftzufuhranschluss zugeführte Luft kann in der ersten Verdichterstufe auf ein Niederdruckniveau verdichtet und die so verdichtete Druckluft in der zweiten Verdichterstufe auf ein Hochdruckniveau weiter verdichtet werden.

Im Rahmen einer besonders bevorzugten Weiterbildung sieht der Kompressor optional einen zweiten Druckluftzuführungsanschluss zwischen der ersten und zweiten Verdichterstufe vor, der optional genutzt werden kann. Optional kann so die zweite Verdichterstufe zusätzlich zu der auf ein Niederdruckniveau verdichtete Druckluft mit weiterer Druckluft, vorzugsweise aus einem Druckmittelvorratsbehälter, versorgt werden.

Hinsichtlich Ergänzungen und Details wird auf die DE 10 2008 034 240 A1 verwiesen, deren Offenbarungsgehalt, insbesondere hinsichtlich der zusätzlichen Aufladung eines Kompressors aus einem Druckmittelvorratsbehälter, hiermit durch Zitat in den Offenbarungsgehalt der vorliegenden Anmeldung vollumfänglich aufgenommen ist.

Weitere vorteilhafte Weiterbildungen der Erfindung sind den Unteransprüchen zu entnehmen und geben im Einzelnen vorteilhafte Möglichkeiten an, das oben erläuterte Konzept im Rahmen der Aufgabenstellung sowie hinsichtlich weiterer Vorteile zu realisieren.

Hinsichtlich der Anbindung des Kompressors an einen Antrieb hat es sich als vorteilhaft erwiesen, dass die Kolbenstange, insbesondere an sich starr, mit dem Kolben verbunden ist und dann über das Gelenk in einem einen Verbindungsbereich zwischen Zylindergehäuse und Kurbelgehäuse zum Verdichtungsraum durchsetzenden Führungskanal axial geführt und hin und her bewegbar angeordnet ist. Der Kolben kann dann vorteilhaft in einer axialen Bewegung definiert entlang der Achse des Zylinders zusammen mit der Kolbenstange hin und her bewegt werden. Dieser Vorteil trifft besonders, dann wenn die Kolbenstange an sich starr mit dem Kolben verbunden ist. Eine Volumenvariabilität im Verdichtungsraum ist gering gehalten und Schadräume vermieden. Vorteilhaft bewirkt eine Kolbenanordnung mit starrer Kolbenstange im Zylinder auch eine besonders stabile und damit nicht zuletzt geräuscharm bewegbare Anordnung.

Eine besonders bevorzugte konstruktive Realisierung sieht zur Ausbildung des Gelenks eine an eine Antriebswelle gekoppelte Kurbelwelle vor, mit der die Kolbenstange über einen Koppelstange verbunden ist. Die Koppelstange ist dabei sowohl an einer Kurbelwelle als auch an einem dem Kolben gegenüberliegenden Ende der Kolbenstange mittels einem winkelbeweglichen Gelenk angebunden. Es kann generell auch ein anderes Gestänge oder eine zu einem Gestänge alternative Variante eines Gelenks genutzt werden.

Vorzugsweise ist der Führungskanal mit Führungs- und/oder Dichtmitteln versehen, welche den Spalt zwischen Kolbenstange und einer Wandung des Führungskanals zur verbesserten Führung der Kolbenstange einerseits und/oder zur Abdichtung des Spalts andererseits nutzen. Besonders bevorzugt hat sich eine zweistufige Abdichtung des Spalts erwiesen. Insbesondere ist dazu ein erstes Dichtmittel als eine Hochdruckdichtung an einem der zweiten Verdichterkammer zugewandten Abschnitt des Führungskanals vorgesehen. Insbesondere ist darüber hinaus ein zweites Dichtmittel als eine Umgebungsdichtung an einem einem Kurbelgehäuse zugewandten Abschnitt des Führungskanals gebildet. Eine doppelstufige Dichtung gewährleistet einen sicheren Betrieb des Kompressors auch bei hohen Drücken.

Es hat sich als besonders bevorzugt erwiesen, die Umgebungsdichtung gleichzeitig als ein Führungselement für die Kolbenstange auszubilden. So erweist sich der Aufwand einer doppelstufige Dichtung als besonders effektiv, da er Dicht- und Führungswirkung vereint. Insbesondere kann nur die oder auch die Hochdruckdichtung als ein Führungselement für die Kolbenstange ausgebildet sein. Auf diese Weise wird eine verlässliche Abdichtung zum Verdichtungsraum des Zylinders einerseits und zum Umgebungsraum des Kurbelgehäuse andererseits unter Führung der Kolbenstange erreicht.

Im Rahmen einer besonders bevorzugten Weiterbildung ist vorgesehen, dass die erste und zweite Verdichtungskammer über eine Verbindungsleitung pneumatisch verbunden sind, wobei der Druckluftzuführungsanschluss in der Verbindungsleitung angeordnet ist. Die Verbindungsleitung ist vorteilhaft durch geeignete Zylinderventile zu öffnen und verschließbar - zweckmäßigerweise entsprechend der Verdichtungszyklen der zweistufigen Verdichtung getaktet. Insbesondere sind eingangs- und ausgangsseitig der Verbindungsleitung, d. h. an einer Mündung zu ersten Verdichtungskammer bzw. Einlass der zweiten Verdichtungskammer Zylinderventile zum Öffnen bzw. Schließen der Verbindungsleitung vorgesehen.

Im Rahmen einer weiteren besonders bevorzugten Weiterbildung ist vorgesehen, dass die Verbindungsleitung einen Zwischenkühler aufweist bzw. darstellt. Eine Zwischenkühlerfunktion hat im Rahmen einer zweistufigen Verdichtung insbesondere den Vorteil, dass -hochverdichtete- Ladeluft aus der zweiten Verdichterstufe eine vergleichsweise geringe Temperatur aufweist. Insbesondere hat dies im Rahmen einer zweistufigen Verdichtung den Vorteil, dass sich gekühlte, vorverdichtete Ladeluft aus der ersten Verdichterstufe besser in einer zweiten Verdichterstufe weiter verdichten lässt.

Der Zwischenkühler kann beispielsweise in Form eine Wärmetauscheranordnung mit einem der Verbindungsleitung Wärme entziehenden und abführenden Kühlkreis gebildet sein. Zusätzlich oder alternativ kann - vorliegend konstruktiv besonders vorteilhaft realisierbar - in der Verbindungsleitung ein geeignetes Wärmeabführmittel vorgesehen sind. Als vorteilhaft erweist sich insbesondere eine den Wärmeübergang zwischen Druckluft in der Verbindungsleitung und der Umgebung, insbesondere des Zylindergehäuses, verbesserndes Wärmeabführmittel oder Wärmeübergangsmittel. Ein Wärmeabführmittel kann beispielsweise als ein in der Nähe oder zur Verbindungsleitung geführter Kühlkanal oder dergleichen gebildet sein. Ein Wärmeübergangsmittel kann beispielsweise in Form einer Rippe, einer Fahne oder einer sonstigen die Oberfläche zwischen Verbindungsleitung und Umgebung verbesserndes Wärmeübergangsmittel gebildet sein.

In einer besonders kompakten Weiterbildung ist die Verbindungsleitung in einer Gehäusewandung des Zylinders gebildet. Generell kann die Verbindungsleitung je nach Bedarf auch -ganz oder teilweise- außerhalb der Gehäusewandung verlaufen, insbesondere jedenfalls teilweise auch außerhalb des Zylinders verlaufen. Im Rahmen der vorgenannten zum Zylinder extern gebildeten Verbindungsleitung hat es sich als vorteilhaft erwiesen, einen Zwischenkühler, insbesondere Wärmetauscher und/oder ein Wärmeabführmittel, in der externen Verbindungsleitung vorzusehen. Eine solche Zwischenkühlung kann eine Wärmeabfuhr mit vergleichsweise großer Kapazität realisiert und sehr effektiv ausgelegt werden. Dabei kann ein Zwischenkühler dennoch vergleichsweise kompakt realisiert sein.

Eine besonders kompakte Weiterbildung sieht vor, dass die Verbindungsleitungen als Durchführung eines Kolbenkörpers, insbesondere eines Kolbenkopfes, des Kolbens gebildet ist. Die Durchführung kann insbesondere oben genannte Wärmeabführmittel und eine geeignete Anordnung von Zylinderventilen aufweisen. Die Durchführung ist vorteilhaft über ein Zylinderventil an eine zweite Verdichterstufe angeschlossen.

Die Erfindung führt zur Lösung der Aufgabe auch auf eine Druckluftversorgungsanlage mit einem vorgenannten Kompressor und ein pneumatisches System mit der Druckluftversorgungsanlage und einer Pneumatikanlage. Die Pneumatikanlage ist besonders bevorzugt in Form einer Luftfederanlage eines Fahrzeugs gebildet. Dazu weist die Luftfederanlage vorzugsweise eine Anzahl von Luftfedern auf. Eine Luftfeder ist dabei als eine Kombination eines Balgs mit einem Federventil gebildet. Das Federventil regelt die Luftbefüllung bzw. Entlüftung des Balgs.

Das Verfahren bietet in besonders bevorzugter Weise die Möglichkeit, dass die Druckluftzuführung im ersten Betriebsmodus offen betrieben wird. Unter einem offenen Betrieb wird ein Betrieb verstanden, bei dem Druckluftzuführung offen gegen die Umgebung ist, nämlich unter Zuführung von Luft aus der Umgebung über den Luftzufuhranschluss.

Das Verfahren bietet auch die Möglichkeit, zusätzlich oder alternativ zu den vorgenannten Weiterbildungen, die Druckluftzuführung im zweiten Betriebsmodus geschlossen zu betreiben. Insbesondere, jedoch nicht notwendiger Weise, kann dazu vorgesehen sein, dass der Luftzufuhranschluss geschlossen ist. In der geschlossenen Betriebsweise wird insbesondere Druckluft nur aus dem Druckmittelbehälter der zweiten Verdichtungsstufe zugeführt. In einem vom zweiten Betriebsmodus umfassten sogenannten Boost-Modus, kann auch Luft über den Luftzufuhranschluss als auch Druckluft aus dem Druckmittelvorratsbehälter dem Verdichtungsraum im Zylinder zugeführt werden.

Ausführungsbeispiele der Erfindung werden nun nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen.

Insbesondere ist das Konzept der Erfindung nicht beschränkt auf die in den folgenden Ausführungsformen beschriebene Gestaltung einer Entlüftungsleitung und Pneumatikhauptleitung. Diese können je nach Bedarf mit verschiedensten Magnetventilanordnungen versehen sein, um eine Trennfunktion zwischen Pneumatikanlage und Druckluftversorgungsanlage und/oder eine Entlüftungsfunktion vorzusehen. Insbesondere kann eine Entlüftungsmagnetventilanordnung vorgesehen sein, die ein direkt entlüftendes Entlüftungsventil in der Entlüftungsleitung vorsieht. Insbesondere kann eine Entlüftungsmagnetventilanordnung vorgesehen sein, die ein vorgesteuertes Entlüftungsventil in der Entlüftungsleitung vorsieht, wobei ein Steuerventil einen Druck der Pneumatikhauptleitung nutzt, um das Entlüftungsventil mit einem Steuerdruck zu beaufschlagen. Die Magnetventilanordnung kann elektrisch steuerbar sein und insbesondere eine geeignete Anzahl und Ausgestaltung von Wegeventilen, z.B. ein 2/2- oder ein 3/2-Wegeventil vorsehen, die bei Bedarf auch in einem Doppelanker-Magnetventil oder dgl. Konstruktion realisiert sein können.

Die in der Beschreibung, in der Zeichnung sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Weitere Vorteile, Merkmale und Einzelheiten der Erfindung ergeben sich aus der nachfolgenden Beschreibung der bevorzugten Ausführungsbeispiele sowie anhand der Zeichnung; diese zeigt in:
Fig. 1 ein Schaltbild eines pneumatischen Systems mit einer besonders bevorzugten Ausführungsform einer Druckluftversorgungsanlage, die eine verbesserte Verfügbarkeit von Druckluft sowohl beim Belüften als auch Entlüften einer als Luftfederanlage gebildeten Pneumatikanlage eines Fahrzeugs vorsieht;
Fig. 2 eine besonders bevorzugte Ausführungsform eines Kompressors mit vorliegend einer einzigen zweistufigen Verdichtereinheit mit einem einzigen Zylinder und einem einzigen in einem Verdichtungsraum des Zylinders zweiseitig druckbeaufschlagbaren Kolben.

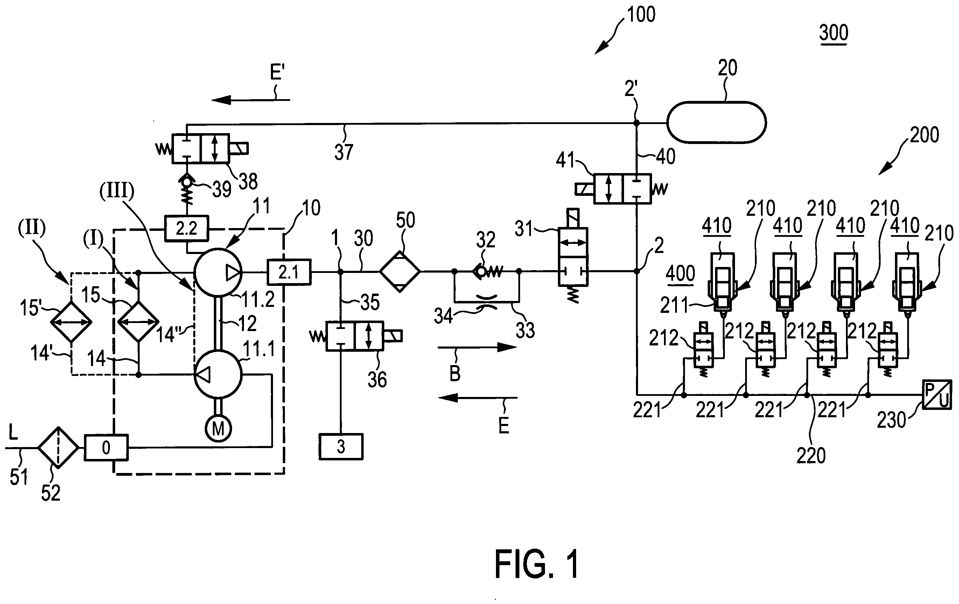

Fig. 1 zeigt ein pneumatisches System 300 mit einer Druckluftversorgungsanlage 100 und einer vorliegend in Form einer Luftfederanlage eines nicht näher dargestellten Fahrzeugs 400 gebildeten Pneumatikanlage 200.

Vorliegend ist die Luftfederanlage mit einer beispielhaften Anzahl von vier Luftfedern 210 gebildet, wobei jede Luftfeder 210 einem Rad eines nicht näher dargestellten Fahrzeugs 400 zugeordnet ist. Vom Fahrzeug 400 ist vorliegend lediglich symbolisch das in radnähe gebildet Auflager 410 gezeigt, das bei Befüllen der Luftfeder 210 angehoben bzw. bei Entlüften der Luftfeder 210 abgesenkt werden kann.

Eine Luftfeder 210 umfasst einen hier als Balg 211 bezeichneten Luftbalg zur Aufnahme von Druckluft und ein Luftfederventil 212, das die Druckluftmenge im Balg 211 hält oder entlässt bzw. ein Befüllen des Balgs 211 mit Druckluft zulässt. Ein Luftfederventil 212 ist als steuerbares Magnetventil, hier als 2/2-Wegeventil, gebildet. Jedes der Luftfederventile 212 ist vorliegend in einem durch die Federkraft einer nicht näher bezeichneten Feder in einem stromlos geschlossenen Zustand gezeigt. Die Luftfederventile 212 sind an eine als Sammelleitung ausgebildete Galerieleitung 220 über geeignete Federzweigleitungen 221 angeschlossen. Direkt an die Galerieleitung 220 angeschlossen ist ein Spannungs-Druck-Sensor 230, der in der Lage ist, einen Druck in der Galerieleitung 220 -und bei geeigneter Schaltung der Luftfederventile 212- auch einen Druck in den Luftfedern 210 zu messen. Der Spannungs-Druck-Sensor 230 kann in Verbindung mit einem Speichersystem, nämlich vorliegend dem Speicher 20, der Pneumatikleitung 40 und dem Speicherventil 41 auch einen Speicherdruck messen. Drucksensorsignale können zur Veranlassung weiterer Steuermaßnahmen an eine Luftfedersteuerung und/oder eine Fahrzeugsteuerung übermittelt werden, welche vorliegend nicht näher dargestellt ist.

Die Versorgung der Pneumatikanlage 200 in Form der Luftfederanlage erfolgt vorliegend mit Druckluft aus der Druckluftversorgungsanlage 100. Die Pneumatikanlage 200 ist dazu über einen Druckluftanschluss 2 an die Druckluftversorgungsanlage 100 angeschlossen. Dem Druckluftanschluss 2 kann Druckluft aus einer Druckluftzuführung 10 mit einem Kompressor 1 über eine Pneumatikhauptleitung 30 zugeführt werden. Dem Druckluftanschluss 2 kann auch Druckluft aus einem Druckmittelvorratsbehälter 20 über einen weiteren Druckluftanschluss 2' und eine weitere Pneumatikleitung 40 zugeführt werden.

Die Druckluftversorgungsanlage 100 weist zur zweckmäßigen Auswahl der Zuführungsart von Druckluft zur Pneumatikanlage 200 geeignete Trennventile, nämlich ein erstes Trennventil 31 in der Pneumatikhauptleitung 30 und ein zweites Trennventil 41 in der weiteren Pneumatikleitung 40 auf. Das erste und zweite Trennventil 31, 41 ist jeweils als ein steuerbares Magnetventil - hier als ein 2/2-Wegeventil - ausgebildet. In Fig. 1 sind das erste und zweite Trennventil 31, 41 jeweils in einem geschlossenen Zustand gezeigt, so dass die Pneumatikanlage 200 von der Druckluftversorgungsanlage 100 vollständig getrennt ist. Dies führt vorteilhaft dazu, dass ein Lufttrockner 50 der Druckluftversorgungsanlage durch Druckluftbewegungen in der Pneumatikanlage 200 oder Umspeicherung von Druckluft aus dem Druckmittelvorratsbehälter 20 in die Pneumatikanlage 200 nicht nachteilig beeinflusst (z.B. befüllt) wird, wenn das erste Trennventil 31 geschlossen ist.

Insgesamt weist die Druckluftversorgungsanlage 100 eine Druckluftzuführung 10 auf, an welche die Pneumatikhauptleitung 30 angeschlossen ist. In der Pneumatikhauptleitung 30 ist druckluftzuführungsseitig der Lufttrockner 50 und druckluftanschlussseitig das erste Trennventil 31 pneumatisch in Reihenschaltung angeschlossen. Zwischen dem Lufttrockner 50 und dem ersten Trennventil 31 ist eine als pneumatische Parallelschaltung ausgeführte Ventilanordnung angeschlossen. Die Ventilanordnung weist ein in Belüftungsrichtung B zur Pneumatikanlage 200 selbsttätig öffnendes Rückschlagventil 32 auf, das in Entlüftungsrichtung E von der Pneumatikanlage 200 zum Lufttrockner 50 sperrt. In einer zur Pneumatikhauptleitung 30 parallelen als Bypassleitung 33 geschalteten pneumatischen Leitung ist eine Drossel 34 angeordnet, die bidirektional durchströmbar als Regenerationsdrossel dient. Die Drossel 34 weist eine Nennweite auf, die ausreichend ist, um beim Entlüften der Pneumatikanlage 200 bei geöffnetem ersten Trennventil 31 einen Druckabfall dergestalt zur Verfügung zu stellen, dass ein Lufttrockner 50 im Rahmen einer Druckwechsel-Adsorption ausreichend regeneriert.

Ein in Entlüftungsrichtung E geführter Druckluftstrom kann über eine an die Pneumatikhauptleitung 30 angeschlossene Entlüftungsleitung 35 zu einem Entlüftungsanschluss 3 zur Umgebung entlüftet werden. In der Entlüftungsleitung 35 ist ein für einen Entlüftungsvorgang zu öffnendes weiteres Trennventil 36 angeordnet. Das weitere Trennventil 36 ist wie das erste und zweite Trennventil 31, 41 als steuerbares Magnetventil, nämlich hier als 2/2-Wegeventil ausgebildet.

In einer hier nicht gezeigten Abwandlung kann auch eine grundsätzlich andere Gestaltung der Pneumatikhauptleitung 30 und Entlüftungsleitung 35 vorgesehen sein, z. B. mit einer geeigneten vorgesteuerten Entlüftungsmagnetventilanordnung oder dergleichen.

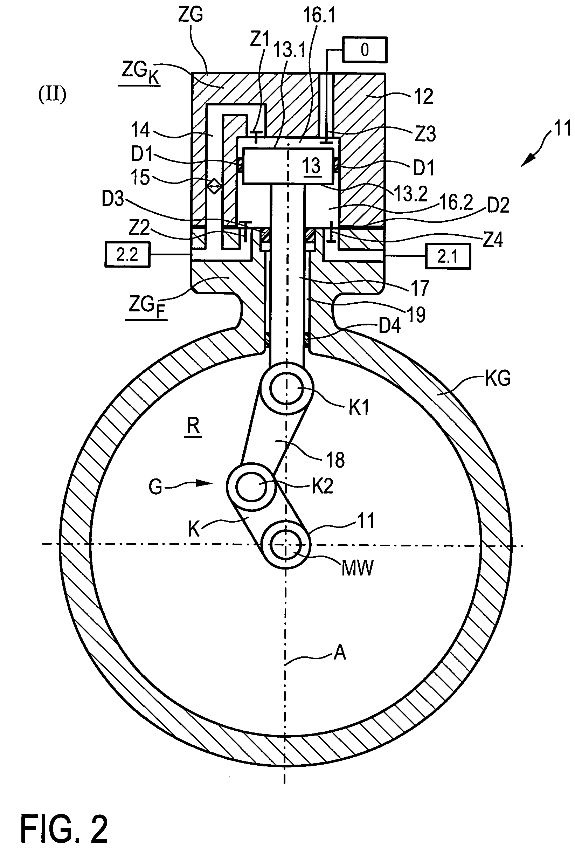

Die Druckluftzuführung 10 weist vorliegend einen gemäß dem Konzept der Erfindung ausgebildeten Kompressor 11 auf, der anhand der in Fig. 1 und Fig. 2 beispielhaft dargestellten, besonders bevorzugten Ausführungsform im Folgenden beschrieben wird. Der Kompressor 11 der Druckluftzuführung 10 ist mit der Druckluftzuführung 10 vorliegend als ein separat an die Druckluftversorgungsanlage 100 anschließbares Gerät gebildet. Das insofern als Druckluftzuführungsgerät zu bezeichnende Bauteil der Druckluftzuführung 10 weist einen ersten Druckluftzuführungsanschluss 2.1 auf, an den die Pneumatikhauptleitung 30 der Druckluftversorgungsanlage 100 anschließbar ist. Weiter weist die Druckluftzuführung 10 einen zweiten Druckluftzuführungsanschluss 2.2 auf, an den noch eine weitere Pneumatikleitung 37 zum Druckmittelvorratsbehälter 20 über ein noch ein weiteres Trennventil 38 anschließbar ist. An die noch weitere Pneumatikleitung 37 ist der Druckmittelvorratsbehälter 20 über den oben genannten zweiten Druckluftanschluss 2' angeschlossen. An den zweiten Druckluftanschluss 2' ist auch die weitere Pneumatikleitung 40 zum Druckluftanschluss 2 angeschlossen.

Die noch weitere Pneumatikleitung 37 ist -bei geöffnetem noch weiteren Trennventil 38 - nur unidirektional von Druckluft durchströmbar, nämlich in einer vom Druckmittelvorratsbehälter 20 ausgesehen, weiteren Entlüftungsrichtung E'. Dazu weist die noch weitere Pneumatikleitung 37 ein weiteres Rückschlagventil 39 auf, das in der noch weiteren Entlüftungsrichtung E' selbsttätig öffnet und in Gegenrichtung sperrt. Die noch weitere Pneumatikleitung 37 ist somit ausgelegt, dem zweiten Druckluftzuführungsanschluss 2.2 der Druckluftzuführung 10 Druckluft aus dem Druckmittelvorratsbehälter 20 zuzuführen, wenn das noch weitere Trennventil 38 öffnet.

Weiter weist die Druckluftzuführung 10 einen Luftzufuhranschluss 0 auf, über den Luft aus einer Luftzufuhr L - in einem Filter 52 einer Ansaugleitung 51 gefiltert - zugeführt werden kann.

Wie aus Fig. 1 erkennbar ist der Kompressor 11 der Druckluftzuführung 10 mit einer ersten Verdichterstufe 11.1 und einer zweiten Verdichterstufe 11.2 ausgelegt. Gemäß dem Konzept der Erfindung ist bei der hier beschriebenen Ausführungsform der Kompressor 11 mit einem einzigen Zylinder 12 mit einem in Fig. 2 näher beschriebenen Verdichtungsraum ausgeführt. Ein einziger im Verdichtungsraum beidseitig druckbeaufschlagbarer Kolben 13 des Kompressors 11 wird zur Bewegung in dem Verdichtungsraum von einem Motor M angetrieben. Der Zylinder 12 mit Verdichtungsraum und Kolben 13 des Kompressors 11 ist vorliegend unter Bildung beider Verdichtungsstufen 11.1 und 11.2 auf einer einzigen Seite des Motors M angeordnet. Wie aus der weiteren Beschreibung der Fig. 2 ersichtlich, ist dies eine besonders kompakte Anordnung des Zylinders 12 unter Nutzung eines einzigen Kolbens 13.

Fig. 1 stellt symbolisch drei Varianten von Ausführungsformen einer Druckluftzuführung 10 dar. Die Druckluftzuführung bzw. der Kompressor 11 weist eine Verbindungsleitung 14 zwischen der ersten Verdichterstufe 11.1 und der zweiten Verdichterstufe 11.2 in allen als I, II, III bezeichnete Varianten auf. Die Anordnung einer Verbindungsleitung zwischen der ersten und zweiten Verdichterstufe 11.1, 11.2 in den Varianten I, II, III ist unterschiedlich ausgeführt.

In der besonders bevorzugten in Fig. 2 beispielhaft weiter beschriebenen ersten Variante I ist die Verbindungsleitung 14 in einer Gehäusewandung des Zylinders 12 gebildet. Die Verbindungsleitung 14 weist in dieser Ausführungsform auch einen Zwischenkühler 15 auf, der sowohl einen Wärmetauscher als auch geeignete Wärmeabführmittel aufweisen kann. Diese in Fig. 2 dargestellte besonders bevorzugte erste Variante I einer Druckluftzuführung 10 mit dem Kompressor 11 hat sich als besonders kompakt und gleichzeitig effizient erwiesen, um Druckluft zwischen einer ersten und zweiten Verdichterstufe 11.1, 11.2 zu kühlen. Eine gekühlte vorverdichtete Druckluft der ersten Verdichterstufe 11.1 kann auf einen höheren Druck in der zweiten Verdichterstufe 11.2 verdichtet werden und so dem ersten Druckluftzuführungsanschluss 2.1 bei höherem Druckniveau zur Verfügung gestellt werden. Gegebenenfalls lässt sich die Verfügbarkeit von Druckluft, d.h. insbesondere eine Druckluftmenge, noch weiter dadurch steigern, dass über den zweiten optional nutzbaren Druckluftzuführungsanschluss 2.2 der zweiten Verdichterstufe 11.2 weiteres Druckmittel zugeführt wird und -in einem sogenannten Boost-Betrieb- zusammen mit der auf hohem Niveau verdichteten und gegebenenfalls gekühlten Druckluft der ersten Verdichterstufe 11.1 in der zweiten Verdichterstufe 11.2 weiter verdichtet und im ersten Druckluftzuführungsanschluss 2.1 zur Verfügung gestellt wird.

In einer das gleiche Konzept verfolgenden zweiten Variante II ist die vorliegend gepunktet dargestellte Verbindungsleitung 14' ebenfalls mit einem Zwischenkühler 15' außerhalb der Gehäusewandung des Zylinders 12 - insofern außerhalb der Druckluftzuführung 10 - geführt. Dies schafft zusätzlich Bauraum, um einen Zwischenkühler 15' größer auszubilden und damit mit größerer Kühlleistung und effizienter in der Verbindungsleitung 14' der zweiten Variante II anordnen zu können.

In Fig. 1 ist auch eine Verbindungsleitung 14" der dritten Variante III der Druckluftzuführung 10 - hier ohne Zwischenkühler - gezeigt. Die Verbindungsleitung 14" der dritten Variante III ist als Durchführung eines Kolbenkörpers des Kolben 13 gebildet. Die dritte Variante III der bevorzugten Ausführungsform eines Kompressors 11 bzw. einer Druckluftzuführung 10 ist somit besonders kompakt ausgelegt. Aufgrund der vergleichsweise kurzen Verbindungsleitung 14" wird der gesamte Verdichtungsraum im Zylinder 12 gering gehalten, so dass eine besonders hohe Verdichtungsdruckamplitude erreicht werden kann. Auch in dieser Ausführung kann die Druckluftmenge der Druckluftzuführung 10 mittels des Boost-Betriebs unter Nutzung der Pneumatikleitung 37 in Verbindung mit einem dem Einlassventil im Verdichtungsraum gesteigert werden.

Im Folgenden beispielhaft, lediglich Bezug nehmend auf die erste Variante I der Ausführungsform der Fig. 1, ist in Fig. 2 ein Kompressor 11 mit vorliegend einer einzigen zweistufigen Verdichtereinheit gezeigt. Grundsätzlich liegt es im Rahmen der Erfindung, einen Kompressor auch mit einer zweiten, dritten und weiteren höheren Anzahl von zweistufigen Verdichtereinheiten auszulegen. Diese können als sequentielle zweistufige Verdichtereinheiten in Reihe gekoppelt werden und so ein besonders hohes Verdichtungsdruckniveau der Druckluft in der Pneumatikhauptleitung zur Verfügung stellen. Wahlweise können die zweistufigen Verdichtereinheiten auch unabhängig voneinander an eine Pneumatikhauptleitung 30 angeschlossen sein, um so ein besonders großes Volumen von vergleichsweise hoch verdichteter Druckluft in der Pneumatikhauptleitung 30 zur Verfügung zu stellen. Die in der ersten Variante I benannte Ausführungsform eines Kompressors 11 sieht eine zweistufige Verdichtereinheit vor, die im Folgenden näher mit dem Kompressor 11 beschrieben wird.

Dazu zeigt Fig. 2 den Kompressor 11 mit einem einzigen Zylinder 12 sowie einem einzigen in einem Verdichtungsraum des Zylinders 12 zweiseitig druckbeaufschlagbaren Kolben 13. Der Kolben 13 ist vorliegend als ein Stufenkolben ausgebildet, der eine Flachseite 13.1 und eine Stufenseite 13.2 aufweist. Eine erste Verdichtungskammer 16.1 im Verdichtungsraum ist als Teil der ersten Verdichterstufe 11.1 auf der Flachseite 13.1 des Kolbens 13 gebildet. Eine zweite Verdichtungskammer 16.2 ist im Verdichtungsraum als Teil der zweiten Verdichterstufe 11.2 auf der Stufenseite 13.2 des Kolbens 13 gebildet. Der vorliegend im Zylinder 12 gebildete zylindrische Verdichtungsraum wird durch den Kolben 13 somit in zwei im Wesentlichen zylindrische Verdichtungskammern 16.1, 16.2 geteilt. Die als Flachseite 13.1 bezeichnete Kolbenoberseite und die als Stufenseite bezeichnete Kolbenunterseite sind im Verdichtungsbetrieb beide druckbeaufschlagt. An den Kolben 13 schließt kolbenunterseitig eine Kolbenstange 17 winkelstarr an. Ein so realisiertes Linearpleuel hat erhebliche Vorteile gegenüber sonstigen Schwenkpleueln, bei denen der Kolben an einer Kolbenstange beweglich oder schwenkbar befestigt wäre. Vorliegend sind Schadräume in diesem Bereich gering gehalten, was zu einem verbesserten Wirkungsgrad führt. Die zweite Verdichtungskammer 16.2 ist im verfügbaren Verdichtungsvolumen aufgrund des Volumens der Kolbenstange 17 um ein der technisch variablen Auslegung zugängliches Differenzvolumen der Kolbenstange 17 im Vergleich zum verfügbaren Verdichtungsvolumen der ersten Verdichtungskammer 16.1 verringert. Damit weist die zweite Verdichtungskammer 16.2 ein bei Verdichtung höheres Hochdruckniveau im Vergleich zu einem bei Verdichtung niedrigerem Niederdruckniveau der ersten Verdichtungskammer 16.1 auf.

Der Kolben 13 weist eine umfänglich umlaufende Kolbendichtung D1 auf, welche die erste Verdichtungskammer 16.1 gegen die zweite Verdichtungskammer 16.2 abdichtet. Über Zylinderventile Z1, Z2 sind die erste Verdichtungskammer 16.1 und die zweite Verdichtungskammer 16.2 pneumatisch durch die zuvor erläuterte Verbindungsleitung 14 verbunden. In der Verbindungsleitung 14 ist der ersten Variante I folgend vorliegend der Zwischenkühler 15 symbolisch eingezeichnet. Die pneumatische Verbindungsleitung 14 ist gemäß der ersten Variante II in einer Gehäusewandung ZG des Zylinders 12 als Durchführung gebildet. Die Durchführung weist am Zylinderventil Z1 eine verschließbare Öffnung zur ersten Verdichterkammer 16.1 auf, sowie am Zylinderventil Z2 eine zweite verschließbare Öffnung zur zweiten Verdichterkammer 16.2 auf. Die pneumatische Verbindungsleitung 14 weist auch den zweiten Druckluftzuführungsanschluss 2.2 auf.

Konstruktiv ist die Verbindungsleitung 14 in einem Abschnitt-im Wesentlichen in einem Niederdruckbereich- in einem Kopf ZG_{K} des Zylindergehäuses ZG gebildet. Die Verbindungsleitung 14 -im Wesentlichen in einem Hochdruckbereich- ist in einem anderen Abschnitt in einem Fuß ZG_{F} des Zylindergehäuses ZG gebildet. Der Kopf ZG_{K} des Zylindergehäuses ZG ist mit einer Dichtung D2 auf den Fuß ZG_{F} des Zylindergehäuses ZG aufgesetzt und so dicht unter Bildung des Zylindergehäuses ZG befestigt.

An die erste Verdichterkammer 16.1 ist der Luftzufuhranschluss 0 über ein Zylinderventil Z3 angeschlossen, wobei der Zufuhranschluss 0 mit einer Durchführung im Kopf ZG_{K} des Zylindergehäuses ZG gebildet ist. Im Fuß ZG_{F} des Zylindergehäuses ZG ist der erste Druckluftzuführungsanschluss 2.1 als Durchführung gebildet. Der erste Druckluftzuführungsanschluss 2.1 ist an einer Öffnung zur zweiten Verdichterkammer 16.2 durch ein viertes Zylinderventil Z4 verschließbar.

Die zweite Verdichterkammer 16.2 ist über eine Hochdruckdichtung D3 im Spalt zum Fuß ZG_{F} des Zylindergehäuses ZG gegen die Kolbenstange 17 abgedichtet. Weiter ist die Kolbenstange 17 durch eine Dichtung D4 gegen die Umgebung, nämlich hier dem Innenraum R eines Kurbelgehäuses KG, abgedichtet. Die Kolbenstange 17 ist - starr am Kolben 13 befestigt- entlang der Achse A des Kompressors 11 hin und her bewegbar. Dabei wird die Kolbenstange 17 zusammen mit dem Kolben 13 zur Ausführung einer translatorischen Bewegung, vorliegend einer Hin- und Her-Bewegung, entlang der Achse A von einem Motor M angetrieben. Die Drehbewegung einer Antriebswelle MW und der Kurbelwelle K wird über eine das Gelenk G mit bildende Koppelstange 18 in die Hin- und Herbewegung umgesetzt. Dazu weist die Koppelstange 18 zur Ausbildung des Gelenks G eine Drehlagerung K1 an der Kolbenstange 17 einerseits und eine Drehlagerung K2 an der Kurbelwelle K andererseits auf. Das im Übrigen mit ovalem Innenraum R gebildete Kurbelgehäuse KG erlaubt so die Bewegung des Gelenks G im Innenraum R.

Bei drehender Antriebswelle MW erfolgt also ein Amplitudenhub unter Drehung der Kurbelwelle K, der die Amplitude der Hin- und Her-Bewegung je nach Auslegung der Kurbelwelle K und der Koppelstange 18 umsetzt.

Fig. 2 zeigt den oberen Umkehrpunkt der Hin- und Her-Bewegung, wobei der Kolben 13 an dem oberen Umkehrpunkt der ersten Verdichterkammer 16.1 bereits eine über die Luftzufuhr L zugeführte Luft bis auf ein Niederdruckniveau in der ersten Verdichterkammer 16.1 verdichtet hat. Das Zylinderventil Z3 verschließt in diesem Zustand die Öffnung zum Luftzufuhranschluss 0 während das Zylinderventil Z1 die Öffnung zur Verbindungsleitung 14 öffnet. Damit kann die auf ein Niederdruckniveau verdichtete Luft als Druckluft in die Verbindungsleitung 14 gedrückt werden. Die so bis auf ein Niederdruckniveau verdichtete Druckluft wird vom Zwischenkühler 15 gekühlt über die vom Zylinderventil Z2 geöffnete Öffnung der Verbindungsleitung 14 der zweiten Verdichterkammer 16.2 zugeführt. Optional kann auch unter Öffnung des zweiten Druckanschlusses 12.2 Druckluft auf Hochdruckniveau aus dem Druckmittelvorratsbehälter 20 der Verbindungsleitung 14 unter Öffnung zur zweiten Verdichterkammer 16.2 zugeführt werden. In einer Abwärtsbewegung der Hin- und Her-Bewegung aus dem Zustand der Kolbenstellung in Fig. 2 kann nun die Druckluft in der zweiten Verdichterkammer 16.2 weiter auf ein Hochdruckniveau verdichtet werden. Die auf ein Hochdruckniveau verdichtete Druckluft kann schließlich bei geschlossenem Zylinderventil Z2 unter Öffnen des Zylinderventils Z4 dem ersten Druckluftzuführungsanschluss 2.1 zugeführt werden. Über die Gesamtdruckluftzuführung 1 kann so die auf ein sehr hohes Hochdruckniveau verdichtete Druckluft der Pneumatikhauptleitung 30 der Druckerversorgungsanlage zugeführt werden. Der Kompressor 11 sichert einen Betriebsdruck von mindestens 20 bar für die auf Hochdruckniveau verdichtete Druckluft.

Der Führungskanal 19 durchsetzt als Durchführung sowohl den Fuß ZG_{F} des Zylindergehäuses ZG als auch den oberen Teil des Kurbelgehäuses KG zum Innenraum R des Kurbelgehäuses KG. Die erste und zweite Dichtungskammer 16.1, 16.2 sind bei der hier beschriebenen Ausführungsform bauraumsparend durch in einem Zylindergehäuse ZG bzw. einem Kurbelgehäuse KG, liegende Dichtungen D1, D2, D3, D4 abgedichtet. Dazu weist ein Gehäuse ZG, KG entsprechende Ringnuten oder Ansätze auf, um ein verrutschsicheres Anbringen der Dichtung D1, D2, D3, D4 zu ermöglichen. Diese Ausführung hat sich als sicherer erwiesen im Vergleich zu einer Anbringung einer Dichtung an der Kolbenstange 17. Gleichwohl ist die Anbringung einer Dichtung D1 an einem bewegten Teil wie dem Kolben 13 dennoch möglich. Die vorliegende Ausführungsform hat sich jedoch als besonders vorteilhaft erwiesen, um ein vergleichsweise kleines und möglichst unveränderliches Schadraumvolumen zu realisieren. Mit anderen Worten ist durch die Fixposition der Hochdruckdichtung D3 sichergestellt, dass das Verdichtungsvolumen der zweiten Verdichtungskammer 16.2 konstant ist.

Im Übrigen ist die Ausführung eines Gelenks G in Abwandlung zur vorliegenden Ausführungsform je nach Bedarf im Rahmen des Konzepts der Erfindung möglich. insgesamt erlaubt die vorliegende Ausführungsform eine vergleichsweise kostengünstige Herstellung eines Kompressors 11. Sowohl die erste Variante I als auch die dritte Variante III sieht eine Schadraumvolumen begrenzende direkte und kompakte Kanalführung der Verbindungsleitung 14 im Zylindergehäuse ZG - in der dritten Variante III im Kolbenkörper des Kolbens 13 - vor.

Der Betrieb des Kompressors 11 sichert eine 180° Kolbenphasenverschiebung zwischen erster Verdichterstufe und zweiter Verdichterstufe. Dies bewirkt ein niedriges dynamisches Kraftniveau für Kurbelbetrieb und Motor sowie auch ein geringes Geräuschniveau. Darüber hinaus wird ein Geräuschniveau reduziert durch die vergleichsweise gering gehaltene Anzahl von kinematisch betriebenen Teilen und Massen. Auch ist eine Abstrahloberfläche für Schall bei der vorliegenden Ausführungsform vergleichsweise gering gehalten; diese erstreckt sich nämlich lediglich auf den Zylinderkopf insbesondere nur auf den Kopf des Zylindergehäuses ZG_{K}.

Darüber hinaus ermöglicht die vorliegende Ausführungsform eine zweckangepasste variable Auslegung von unterschiedlichen Hub- und Verdichtungsquerschnitten je nach Auslegung der Kolbenstange 17 und des Kolbens 13. Dadurch lässt sich ein Kompressor 11, insbesondere eine Druckluftzuführung 10 ähnlich einem Baukastenprinzip je nach Bedarf auf Kundenbedürfnisse abstellen. Der Kompressor ist schnittstellenkompatibel zu bekannten Elektromotorantrieben.

Insgesamt erlaubt es das Konzept der Erfindung einen optionalen Zwischenkühler 15 je nach Bedarf in einer Verbindungsleitung 14 zur Wirkungsgradoptimierung zu integrieren. Auch lässt sich ein als Aufladeanschluss wirkender Druckluftzuführungsanschluss 2.2 mit einem Druckmittelvorratsbehälter 20 pneumatisch verbinden, um einen Boost-Betrieb für die zweite Verdichterstufe zu realisieren. Insgesamt ergibt sich eine verbesserte Verfügbar von Druckluft mit den Vorteilen, die eine zweistufige Verdichtung gegenüber einen einstufigen Verdichtung hat in Kombination mit einer kompakten und schallreduzierten sowie sehr effizienten Ausführung gemäß der beschriebenen Ausführungsform.

### Bezugszeichenliste (Bestandteil der Beschreibung)

- 0: Luftzufuhranschluss
- 1: Gesamtdruckluftzuführung
- 11: Kompressor
- 2,2',: Druckluftanschluss
- 2.1, 2.2: Druckluftzuführungsanschluss
- 3: Entlüftungsanschluss
- 10: Druckluftzuführung
- 11.1, 11.2: Verdichterstufe
- 12: Zylinder
- 13: Kolben
- 13.1: Flachseite des Kolbens
- 13.2: Stufenseite des Kolbens
- 14, 14', 14": Verbindungsleitung
- 15, 15', 15": Zwischenkühler
- 16.1: erste Verdichterkammer
- 16.2: zweite Verdichterkammer
- 17: Kolbenstange
- 18: Koppelstange
- 19: Führungskanal
- 20: Druckmittelvorratsbehälter
- 30: Pneumatikhauptleitung
- 31,36, 38, 41: Trennventil
- 32, 39: Rückschlagventil
- 34: Drossel
- 35: Entlüftungsleitung
- 37, 40: Pneumatikleitung
- 50: Lufttrockner
- 51: Ansaugleitung
- 52: Filter
- 100: Druckluftversorgungsanlage
- 200: Pneumatikanlage
- 210: Luftfeder
- 211: Balg
- 212: Luftfederventil
- 220: Galerieleitung
- 221: Federzweigleitung
- 230: Spannungs-Druck-Sensor
- 300: Pneumatisches System
- 400: Fahrzeug
- 410: Auflager
- A: Achse
- B: Belüftungsrichtung
- D1, D2, D3, D4: Dichtung
- E, E': Entlüftungsrichtung
- G: Gelenk
- K: Kurbelwelle
- K1, K2: Drehlagerung
- KG: Kurbelgehäuse
- L: Luftzufuhr
- M: Motor
- MW: Antriebswelle
- R: Raum
- ZG_{K}: Kopf
- ZG_{F}: Fuß
- ZG: Zylindergehäuse
- Z1, Z2, Z3, Z4: Zylinderventil

## Patentansprüche

1. Kompressor (11) für eine Druckluftzuführung (10) einer Druckluftversorgungsanlage (100), zum Betreiben einer Pneumatikanlage (200), insbesondere einer Luftfederanlage eines Fahrzeugs (400), mit einer ersten Verdichterstufe (11.1) und einer zweiten Verdichterstufe (11.2), wobei für die Druckluftzuführung (10)
- ein Luftzufuhranschluss (0) eingangs der ersten Verdichterstufe (11.1) ange-ordnet ist, und
- ein erster Druckluftzuführungsanschluss (2.1), ausgangs der zweiten Verdichterstufe (11.2) angeordnet ist, wobei
der Kompressor (1) wenigstens eine zweistufige Verdichtereinheit mit einem einzigen Zylinder (12) mit einem einzigen in einem Verdichtungsraum des Zylinders zweiseitig druckbeaufschlagbaren Kolben (13) aufweist, wobei der Kolben (13) als ein Stufenkolben mit einer Flachseite (13.1) und mit einer eine Kolbenstange (17) anschließenden Stufenseite (13.2) ausgebildet ist, und wobei
eine erste Verdichtungskammer (16.1) der ersten Verdichterstufe (11.1) in dem Verdichtungsraum auf der Flachseite (13.1) des Stufenkolbens und
eine zweite Verdichtungskammer (16.2) der zweiten Verdichterstufe (11.2) in dem Verdichtungsraum auf der Stufenseite (13.2) des Stufenkolbens gebildet ist,
**dadurch gekennzeichnet, dass** ein Führungskanal (19) Führungs- und Dichtmittel zwischen der Kolbenstange (17) und der Wandung des Führungskanals (19) aufweist und
dass ein erstes Dichtmittel (D3) als eine Hochdruckdichtung an einem der zweiten Verdichterkammer (16.2) zugewandten Abschnitt des Führungskanals (19) gebildet ist.

2. Kompressor (11) nach Anspruch 1 **dadurch gekennzeichnet, dass** ein zweiter Druckluftzuführungsanschluss (2.2) zwischen der ersten und zweiten Verdichterstufe (11.1, 11.2) angeordnet ist.

3. Kompressor (11) nach Anspruch 1 oder 2 **dadurch gekennzeichnet, dass** die Kolbenstange (17) über ein Gelenk (G), insbesondere mit einer an eine Antriebswelle (MW) gekoppelten Kurbelwelle (K) über eine Koppelstange (18) verbunden, in einem einen Verbindungsbereich zwischen Zylindergehäuse (ZG) und Kurbelgehäuse (KG) zum Verdichtungsraum durchsetzenden Führungskanal (19) axial geführt, hin- und herbewegbar angeordnet ist.

4. Kompressor (11) nach Anspruch 1 **dadurch gekennzeichnet, dass** ein zweites Dichtmittel (D4) als eine Umgebungsdichtung an einem einem Kurbelgehäuse (KG) zugewandten Abschnitt des Führungskanals (19), insbesondere unter Ausbildung eines Führungselements, gebildet ist.

5. Kompressor (11) nach einem der Ansprüche 1 bis 4 **dadurch gekennzeichnet, dass** die erste und zweite Verdichtungskammer (16.1, 16.2) über eine Verbindungsleitung (14, 14', 14") pneumatisch verbunden sind, insbesondere über ein jeweils kammerseitig angeordnetes Zylinderventil (Z1, Z2).

6. Kompressor (11) nach Anspruch 5 **dadurch gekennzeichnet, dass** die Verbindungsleitung (14,14') einen Zwischenkühler (15, 15'), insbesondere Wärmetauscher und/oder Wärmeabführmittel, aufweist.

7. Kompressor (11) nach Anspruch 5 oder 6 **dadurch gekennzeichnet, dass** die Verbindungsleitung (14) in einer Gehäusewandung des Zylindergehäuses (ZG) gebildet ist.

8. Kompressor (11) nach Anspruch 5 oder 6 **dadurch gekennzeichnet, dass** die Verbindungsleitung (14') außerhalb einer Gehäusewandung, insbesondere wenigstens teilweise außerhalb des Zylindergehäuses (ZG), verläuft.

9. Kompressor (11) nach einem der Ansprüche 1 bis 8 **dadurch gekennzeichnet, dass** ein zweiter Druckluftzuführungsanschluss (2.2) in einer Verbindungsleitung (14, 14') angeordnet ist.

10. Kompressor (11) nach einem der Ansprüche 1 bis 5 **dadurch gekennzeichnet, dass** eine Verbindungsleitung (14") als Durchführung eines Kolbenkörpers des Kolbens (13) gebildet ist.

11. Kompressor (11) nach Anspruch 10 **dadurch gekennzeichnet, dass** die Durchführung über ein Einlassventil an die zweite Verdichterstufe (11.2) angeschlossen ist.

12. Druckluftversorgungsanlage (100) zum Betreiben einer Pneumatikanlage (200), insbesondere einer Luftfederanlage eines Fahrzeugs (400), aufweisend:
- eine Luftzufuhr (L) und eine daran über einen Luftzufuhranschluss (0) pneumatisch angeschlossene Druckluftzuführung (10) zur Verdichtung von Luft;
- eine an die Druckluftzuführung (10) pneumatisch angeschlossene einen Lufttrockner (50) aufweisende Pneumatikhauptleitung (30) mit einem Druckluftanschluss (2) zur Pneumatikanlage (200)
- einem an den Druckluftanschluss (2) zur Pneumatikanlage (200) und an den Druckluftzuführungsanschluss (2.2) der Druckluftzuführung (10) angeschlossenen Druckmittelvorratsbehälter (20), wobei
die Druckluftzuführung (10) einen Kompressor (11) nach einem der Ansprüche 1 bis 11 aufweist, der über den Luftzufuhranschluss (0) mit der ersten Verdichterstufe (11.1) an die Luftzufuhr (L) angeschlossen ist.

13. Druckluftversorgungsanlage (100) nach Anspruch 12 **dadurch gekennzeichnet, dass** der Kompressor (11) über einen zweiten Drucklüftzuführungsanschluss (2.2) zwischen der ersten und zweiten Verdichterstufe (11.1, 11.2) an den Druckmittelvorratsbehälter (20) angeschlossen ist.

14. Druckluftversorgungsanlage (100) nach Anspruch 12 oder 13 **dadurch gekennzeichnet, dass** eine Luftzufuhr (L) separat von einer Entlüftung gebildet ist.

15. Druckluftversorgungsanlage (100) nach Anspruch 12 oder 13 **dadurch gekennzeichnet, dass** ein Luftzufuhranschluss (0) und ein Entlüftungsanschluss (3) zusammengelegt sind, insbesondere einen gemeinsamen Filter aufweisen.

16. Druckluftversorgungsanlage (100) nach einem der Ansprüche 12 bis 15 **dadurch gekennzeichnet, dass** ein, insbesondere pneumatisch, entsperrbares Rückschlagventil (32) mit dem Lufttrockner (50) in einer pneumatischen Reihenschaltung in der Pneumatikhauptleitung (30) angeordnet ist.

17. Pneumatisches System (300) mit einer Druckluftversorgungsanlage (100) nach einem der Ansprüche 12 bis 16 und einer Pneumatikanlage (200), **dadurch gekennzeichnet, dass** die Pneumatikanlage (200) in Form einer Luftfederanlage eines Fahrzeugs (400) gebildet ist.

18. Verfahren zum Betreiben einer Druckluftversorgungsanlage (100) nach einem der Ansprüche 12 bis 16 aufweisend die Schritte:
- Verdichten von Luft aus der Umgebung in der ersten Verdichterstufe (11.1) auf ein Niederdruckniveau
- weiteres Verdichten der in der ersten Verdichterstufe (11.1) auf ein Niederdruckniveau verdichteten Druckluft in der zweiten Verdichterstufe (11.2) auf ein Hochdruckniveau,
- Zuführen der in der zweiten Verdichterstufe (11.2) auf ein Hochdruckniveau verdichteten Druckluft zur Pneumatikhauptleitung (30),
**dadurch gekennzeichnet, dass**
in einem ersten Betriebsmodus eine Druckluftzufuhr zur zweiten Verdichterstufe (11.2) aus dem Druckmittelvorratsbehälter (20) unterbunden, und,
in einem zweiten, insbesondere optionalen, Betriebsmodus eine Druckluftzufuhr aus dem Druckmittelvorratsbehälter (20) zur zweiten Verdichterstufe (11.2) erfolgt, wobei die Schritte
des Verdichtens und des weiteren Verdichtens in auf unterschiedlichen Seiten des Kolbens (13) gebildeten Verdichtungskammern (16.1, 16.2) desselben Verdichtungsraumes erfolgt.

## Claims

1. Compressor (11) for a compressed-air supply (10) of a compressed-air feed system (100), for operating a pneumatic system (200), in particular an air suspension system of a vehicle (400), having a first compressor stage (11.1) and a second compressor stage (11.2), wherein, for the compressed-air supply (10),
- an air supply connection (0) is arranged at the inlet side of the first compressor stage (11.1), and
- a first compressed-air supply connection (2.1) is arranged at the outlet side of the second compressor stage (11.2), wherein
the compressor (1) has at least one two-stage compressor unit with a single cylinder (12) with a single piston (13) which can be acted on with pressure on two sides in a compression chamber of the cylinder, wherein the piston (13) is formed as a stepped piston with a flat side (13.1) and with a stepped side (13.2) adjoining a piston rod (17), and wherein
a first compression chamber (16.1) of the first compressor stage (11.1) is formed in the compression chamber on the flat side (13.1) of the stepped piston and
a second compression chamber (16.2) of the second compressor stage (11.2) is formed in the compression chamber on the stepped side (13.2) of the stepped piston,
**characterized in that** a guide channel (19) has guide and sealing means between the piston rod (17) and the wall of the guide channel (19), and
**in that** a first sealing means (D3) as a high-pressure seal is formed on a section, facing toward the second compressor chamber (16.2), of the guide channel (19).

2. Compressor (11) according to Claim 1, **characterized in that** a second compressed-air supply connection (2.2) is arranged between the first and the second compressor stage (11.1, 11.2).

3. Compressor (11) according to Claim 1 or 2, **characterized in that** the piston rod (17) is, by means of a joint (G), connected via a coupling rod (18) to the crankshaft (K) which is coupled to a drive shaft (MW), and said piston rod is arranged so as to be movable back and forth in axially guided fashion in a guide channel (19), which extends through a connecting region between cylinder housing (ZG) and crankcase (KG), to the compression chamber.

4. Compressor (11) according to Claim 1, **characterized in that** a second sealing means (D4) is formed as a surroundings seal on a section, facing toward a crankcase (KG), of the guide channel (19), in particular so as to form a guide element.

5. Compressor (11) according to one of Claims 1 to 4, **characterized in that** the first and second compression chambers (16.1, 16.2) are pneumatically connected via by means of a connecting line (14, 14', 14''), in particular via a cylinder valve (Z1, Z2) arranged at each chamber.

6. Compressor (11) according to Claim 5, **characterized in that** the connecting line (14, 14') has an intercooler (15, 15'), in particular heat exchanger and/or heat discharge means.

7. Compressor (11) according to Claim 5 or 6, **characterized in that** the connecting line (14) is formed in a housing wall of the cylinder housing (ZG).

8. Compressor (11) according to Claim 5 or 6, **characterized in that** the connecting line (14') runs outside a housing wall, in particular at least partially outside the cylinder housing (ZG).

9. Compressor (11) according to one of Claims 1 to 8, **characterized in that** a second compressed-air supply connection (2.2) is arranged in a connecting line (14, 14').

10. Compressor (11) according to one of Claims 1 to 5, **characterized in that** a connecting line (14'') is formed as a leadthrough of a piston body of the piston (13) .

11. Compressor (11) according to Claim 10, **characterized in that** the leadthrough is connected to the second compressor stage (11.2) via an inlet valve.

12. Compressed-air feed system (100) for operating a pneumatic system (200), in particular an air suspension system of a vehicle (400), having:
- an air supply (L) and a compressed-air supply (10), which is connected pneumatically to said compressed-air supply via an air supply connection (0), for the compression of air;
- a pneumatic main line (30) which is pneumatically connected to the compressed-air supply (10) and which has an air dryer (50) and which has a compressed-air connection (2) to the pneumatic system (200),
- a pressure medium reservoir (20) which is connected to the compressed-air connection (2) to the pneumatic system (200) and to the compressed-air supply connection (2.2) of the compressed-air supply (10), wherein
the compressed-air supply (10) has a compressor (11) according to one of Claims 1 to 11, which compressor is, via the air supply connection (0), connected by means of the first compressor stage (11.1) to the air supply (L).

13. Compressed-air feed system (100) according to Claim 12, **characterized in that** the compressor (11) is, via a second compressed-air supply connection (2.2), between the first and the second compressor stage (11.1, 11.2), connected to the pressure medium reservoir (20).

14. Compressed-air feed system (100) according to Claim 12 or 13, **characterized in that** an air supply (L) is formed separately from a ventilation means.

15. Compressed-air feed system (100) according to Claim 12 or 13, **characterized in that** an air supply connection (0) and a ventilation connection (3) are combined, in particular have a common filter.

16. Compressed-air feed system (100) according to one of Claims 12 to 15, **characterized in that** an, in particular pneumatically, unblockable check valve (32) is arranged in a pneumatic series connection with the air dryer (50) in the pneumatic main line (30).

17. Pneumatic system (300) having a compressed-air feed system (100) according to one of Claims 12 to 16 and having a pneumatic system (200), **characterized in that** the pneumatic system (200) is in the form of an air suspension system of a vehicle (400).

18. Method for operating a compressed-air feed system (100) according to one of Claims 12 to 16, having the steps:
- compressing air from the surroundings in the first compressor stage (11.1) to a low pressure level,
- further compressing the compressed air that has been compressed to a low pressure level in the first compressor stage (11.1) to a high pressure level in the second compressor stage (11.2),
- supplying the compressed air that has been compressed to a high pressure level in the second compressor stage (11.2) to the pneumatic main line (30),
**characterized in that**,
in a first operating mode, a supply of compressed air to the second compressor stage (11.2) from the pressure medium reservoir (20) is prevented, and
in a second, in particular optional, operating mode, a supply of compressed air from the pressure medium reservoir (20) to the second compressor stage (11.2) is realized, wherein the steps
of the compression and of the further compression are performed in compression chambers (16.1, 16.2), formed on different sides of the piston (13), of the same compression chamber.

## Revendications

1. Compresseur (11) pour une alimentation en air comprimé (10) d'une installation d'alimentation en air comprimé (100), pour faire fonctionner une installation pneumatique (200), en particulier une installation de ressort pneumatique d'un véhicule (400), comprenant un premier étage de compresseur (11.1) et un deuxième étage de compresseur (11.2), dans lequel, pour l'alimentation en air comprimé (10),
- un raccord d'alimentation en air (0) est disposé à l'entrée du premier étage de compresseur (11.1), et
- un premier raccord d'alimentation en air comprimé (2.1) est disposé à la sortie du deuxième étage de compresseur (11.2),
le compresseur (1) présentant au moins une unité de compresseur à deux étages avec un cylindre unique (12) avec un piston unique (13) pouvant être sollicité en pression des deux côtés dans un espace de compression du cylindre, le piston (13) étant réalisé sous forme de piston étagé avec un côté plat (13.1) et avec un côté étagé (13.2) se raccordant à une tige de piston (17), et
une première chambre de compression (16.1) du premier étage de compresseur (11.1) étant formée dans l'espace de compression du côté plat (13.1) du piston étagé et
une deuxième chambre de compression (16.2) du deuxième étage de compresseur (11.2) étant formée dans l'espace de compression du côté étagé (13.2) du piston étagé,
**caractérisé en ce qu'**un canal de guidage (19) présente des moyens de guidage et d'étanchéité entre la tige de piston (17) et la paroi du canal de guidage (19), et
**en ce qu'**un premier moyen d'étanchéité (D3) est formé en tant que joint d'étanchéité haute pression au niveau d'une portion du canal de guidage (19) tournée vers la deuxième chambre de compresseur (16.2).

2. Compresseur (11) selon la revendication 1, **caractérisé en ce qu'**un deuxième raccord d'alimentation en air comprimé (2.2) est disposé entre le premier et le deuxième étage de compresseur (11.1, 11.2).

3. Compresseur (11) selon la revendication 1 ou 2, **caractérisé en ce que** la tige de piston (17), connectée par le biais d'une articulation (G), en particulier à un vilebrequin (K) accouplé à un arbre d'entraînement (MW) par le biais d'une tige de couplage (18), est disposée de manière déplaçable d'avant en arrière de manière guidée axialement dans une région de liaison entre le boîtier de cylindre (ZG) et le carter de vilebrequin (KG) vers le canal de guidage (19) traversant l'espace de compression.

4. Compresseur (11) selon la revendication 1, **caractérisé en ce qu'**un deuxième moyen d'étanchéité (D4) est formé en tant que joint d'étanchéité périphérique au niveau d'une portion du canal de guidage (19) tournée vers un boîtier de vilebrequin (KG), en particulier en formant un élément de guidage.

5. Compresseur (11) selon l'une quelconque des revendications 1 à 4, **caractérisé en ce que** la première et la deuxième chambre de compression (16.1, 16.2) sont connectées pneumatiquement par le biais d'une conduite de liaison (14, 14', 14''), en particulier par le biais d'une soupape de cylindre (Z1, Z2) disposée à chaque fois du côté de la chambre.

6. Compresseur (11) selon la revendication 5, **caractérisé en ce que** la conduite de liaison (14, 14') présente un refroidisseur intermédiaire (15, 15'), en particulier un échangeur de chaleur et/ou un moyen d'évacuation de la chaleur.

7. Compresseur (11) selon la revendication 5 ou 6, **caractérisé en ce que** la conduite de liaison (14) est formée dans une paroi de boîtier du boîtier de cylindre (ZG).

8. Compresseur (11) selon la revendication 5 ou 6, **caractérisé en ce que** la conduite de liaison (14') s'étend à l'extérieur d'une paroi de boîtier, en particulier au moins en partie à l'extérieur du boîtier de cylindre (ZG).

9. Compresseur (11) selon l'une quelconque des revendications 1 à 8, **caractérisé en ce qu'**un deuxième raccord d'alimentation en air comprimé (2.2) est disposé dans une conduite de liaison (14, 14').

10. Compresseur (11) selon l'une quelconque des revendications 1 à 5, **caractérisé en ce qu'**une conduite de liaison (14") est formée en tant que passage d'un corps de piston du piston (13).

11. Compresseur (11) selon la revendication 10, **caractérisé en ce que** le passage est raccordé par le biais d'une soupape d'admission au deuxième étage de compresseur (11.2).

12. Installation d'alimentation en air comprimé (100) pour faire fonctionner une installation pneumatique (200), en particulier une installation de ressort pneumatique d'un véhicule (400), présentant :
- une alimentation en air (L) et une alimentation en air comprimé (10) raccordée à celle-ci pneumatiquement par le biais d'un raccord d'alimentation en air (0), pour la compression d'air ;
- une conduite pneumatique principale (30) présentant un sécheur d'air (50), raccordée pneumatiquement à l'alimentation en air comprimé (10), avec un raccord d'air comprimé (2) pour l'installation pneumatique (200),
- un réservoir de fluide sous pression (20) raccordé au raccord d'air comprimé (2) pour l'installation pneumatique (200) et au raccord d'alimentation d'air comprimé (2.2) de l'alimentation en air comprimé (10),
l'alimentation en air comprimé (10) présentant un compresseur (11) selon l'une quelconque des revendications 1 à 11, qui est raccordé à l'alimentation en air (L) par le biais du raccord d'alimentation en air (0) au premier étage de compresseur (11.1).

13. Installation d'alimentation en air comprimé (100) selon la revendication 12, **caractérisée en ce que** le compresseur (11) est raccordé au réservoir de fluide sous pression (20) par le biais d'un deuxième raccord d'alimentation en air comprimé (2.2) entre le premier et le deuxième étage de compresseur (11.1, 11.2).

14. Installation d'alimentation en air comprimé (100) selon la revendication 12 ou 13, **caractérisée en ce qu'**une alimentation en air (L) est formée séparément d'une désaération.

15. Installation d'alimentation en air comprimé (100) selon la revendication 12 ou 13, **caractérisée en ce qu'**un raccord d'alimentation en air (0) et un raccord de désaérage (3) sont assemblés l'un à l'autre, en particulier présentent un filtre commun.

16. Installation d'alimentation en air comprimé (100) selon l'une quelconque des revendications 12 à 15, **caractérisée en ce qu'**un clapet antiretour (32) déverrouillable notamment pneumatiquement est disposé avec le sécheur d'air (50) dans un montage en série pneumatique dans la conduite pneumatique principale (30).

17. Système pneumatique (300) comprenant une installation d'alimentation en air comprimé (100) selon l'une quelconque des revendications 12 à 16 et une installation pneumatique (200), **caractérisé en ce que** l'installation pneumatique (200) est réalisée sous la forme d'une installation de ressort pneumatique d'un véhicule (400).

18. Procédé pour faire fonctionner une installation d'alimentation en air comprimé (100) selon l'une quelconque des revendications 12 à 16, présentant les étapes suivantes :
- compression d'air provenant de l'environnement dans le premier étage de compresseur (11.1) à un bas niveau de pression,
- compression supplémentaire de l'air comprimé comprimé à un bas niveau de pression dans le premier étage de compresseur (11.1), dans le deuxième étage de compresseur (11.2) à un niveau de haute pression,
- alimentation de la conduite pneumatique principale (30) en l'air comprimé à un niveau de pression élevé dans le deuxième étage de compresseur (11.2),
**caractérisé en ce que**
dans un premier mode de fonctionnement, une alimentation en air comprimé au deuxième étage de compresseur (11.2) depuis le réservoir de fluide sous pression (20) est supprimée, et
dans un deuxième mode de fonction, notamment optionnel, a lieu une alimentation en air comprimé depuis le réservoir de fluide sous pression (20) au deuxième étage de compresseur (11.2), les étapes de compression et de compression supplémentaire ayant lieu dans des chambres de compression (16.1, 16.2) du même espace de compression formées sur des côtés différents du piston (13).
